# EUROPEAN PATENT APPLICATION

(11) **EP 3 629 078 A1**
(43) Date of publication of application: **01.04.2020**
(21) Application number: 19173238.7
(22) Date of filing: 08.05.2019
(51) Int. Cl.: G02C 5/14

(54) **EYEWEAR**

(30) Priority: 26.09.2018 TW 107133815
(71) Applicant: Ke, Bing-Yu, Tainan City 71842 (TW)
(72) Inventor: Ke, Bing-Yu, Tainan City 71842 (TW)
(74) Representative: V.O.

(57) **Abstract**

An eyewear includes a main frame unit (1), two temple units (2), and two connecting units (3). The main frame unit (1) includes two mounting portions (13) respectively at left and right sides thereof. Each of the temple units (2) is disposed in back of a respective one of the mounting portions (13) and includes an elongated temple (21) and a coupling portion (23) that is disposed at a front end of the corresponding temple (21) and that defines spaced-apart first and second coupling holes (231, 232) . Each of the connecting units (3) includes a pivoting portion (31) that is pivotally connected to the respective one of the mounting portions (13), and a first coupling member (34) and a second coupling member (35) that are respectively coupled to the first and second coupling holes (231, 232) of the coupling portion (23) of the corresponding one of the temple units (2).

## Description

The disclosure relates to an eyewear, and more particularly to an eyewear that can be easily disassembled and reassembled.

A conventional eyewear includes a main frame and two temples that are respectively connected to two lateral sides of the main frame and that support the main frame to hang in front of a user's face. There exists many types of eyewear in the market, all with structural and design differences to suit the need of different users.

Therefore, an object of the disclosure is to provide an eyewear that can be easily disassembled and reassembled.

According to the disclosure, the eyewear includes a main frame unit, two temple units, and two connecting units. The main frame unit includes two mounting portions respectively at left and right sides thereof. Each of the temple units is disposed in back of a respective one of the mounting portions, and includes an elongated temple and a coupling portion that is disposed at a front end of the corresponding temple and that defines spaced-apart first and second coupling holes. Each of the connecting units interconnects a respective one of the temple units and the respective one of the mounting portions of the main frame unit, such that the temple units are pivotable relative to the main frame unit. Each of the connecting units includes a pivoting portion that is pivotally connected to the respective one of the mounting portions, and a first coupling member and a second coupling member that are respectively coupled to the first and second coupling holes of the coupling portion of the corresponding one of the temple units.

Other features and advantages of the disclosure will become apparent in the following detailed description of the embodiments with reference to the accompanying drawings, of which:
FIG. 1 is a perspective view of a first embodiment of an eyewear according to the disclosure;
FIG. 2 is a fragmentary exploded perspective view of the first embodiment;
FIG. 3 is a fragmentary sectional top view of the first embodiment;
FIG. 4 is a fragmentary exploded perspective view taken of a second embodiment of the eyewear according to the disclosure; and
FIG. 5 is a fragmentary sectional top view of the second embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

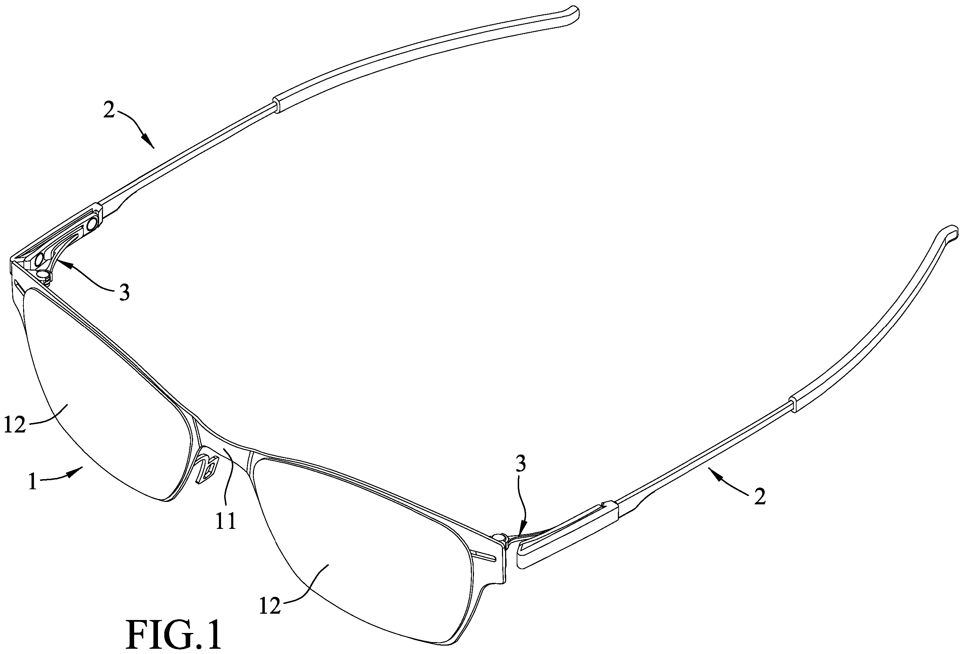

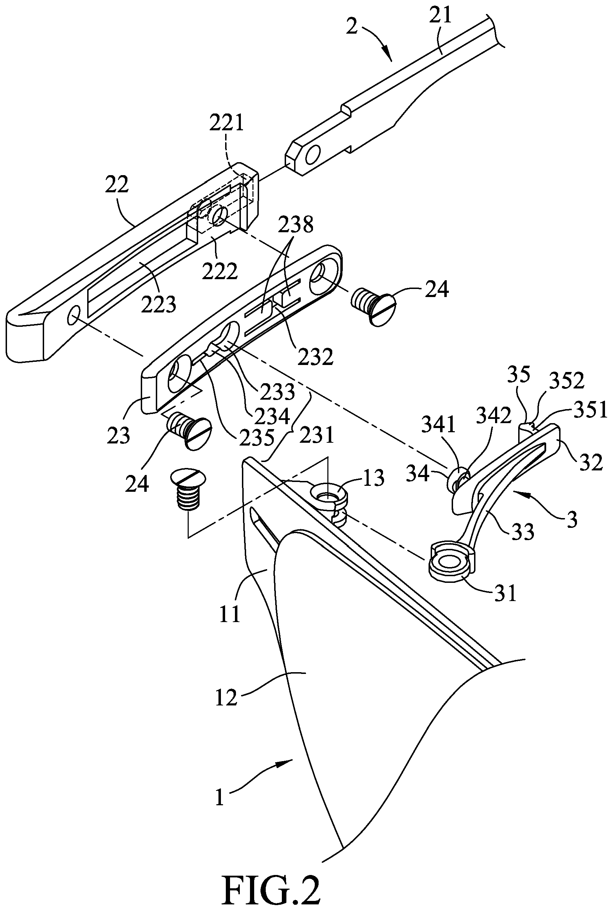

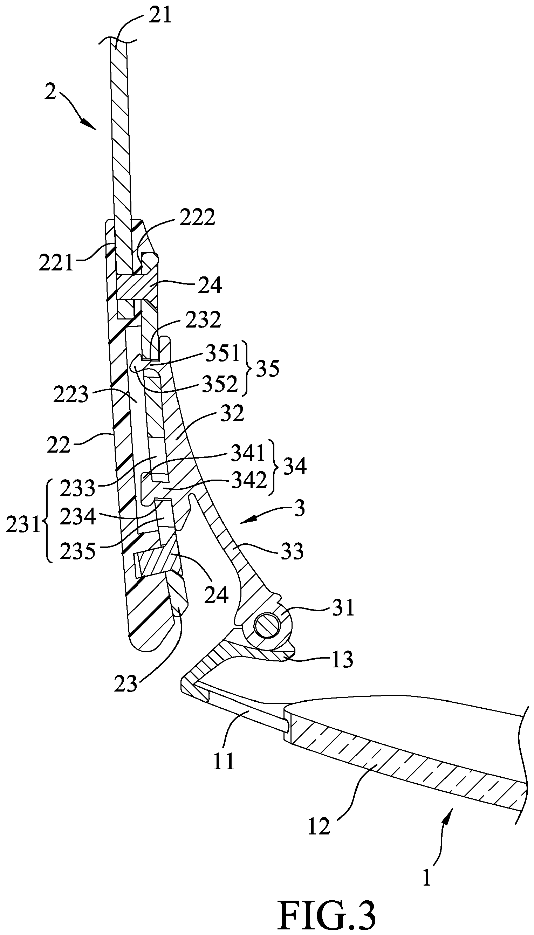

Referring to FIGS. 1 to 3, a first embodiment of an eyewear according to the disclosure is adapted to be worn by a user (not shown), and is a pair of double-lensed, full-framed glasses. In other embodiments, the eyewear can be a pair of glasses, sunglasses, or goggles, etc. with single or double lenses. The eyewear can also be either full-framed, half-framed, or frameless. Nevertheless, the eyewear includes a main frame unit 1, two temple units 2, and two connecting units 3.

The main frame unit 1 includes a bridge 11 at a center thereof, two mounting portions 13 respectively at left and right sides thereof, and two lens portions 12 that are mounted respectively to left and right ends of the bridge 11.

Each of the temple units 2 is disposed in back of a respective one of the mounting portions 13, and includes an elongated temple 21, a coupling portion 23 that is disposed at a front end of the corresponding temple 21, a protecting portion 22 that covers an outer side of the coupling portion 23, and two fixing members 24 that fasten the corresponding temple 21, the protecting portion 22, and the coupling portion 23.

The protecting portion 22 of each of the temple units 2 is formed with an end groove 221 at a rear end of the protecting portion 22 for the front end of the corresponding temple 21 to be inserted thereinto, a side groove 222 that indents from an inner side of the protecting portion 22, and a containing groove 223 that indents from the side groove 222. The coupling portion 23 is mounted to the side groove 222 of the protecting portion 22, and defines spaced-apart first and second coupling holes 231, 232. One of the fixing members 24 extends outwardly from an inner side of the coupling portion 23 through the coupling portion 23 and the protecting portion 22, and the other one of the fixing members 24 extends outwardly from the inner side of the coupling portion 23 through the coupling portion 23, the protecting portion 22 and the corresponding temple 21. In this embodiment, the fixing members 24 are screws operable to screwedly engage the abovementioned elements.

The first coupling hole 231 of the coupling portion 23 of each of the temple units 2 has a main hole section 233, a secondary hole section 234 that is smaller than the main hole section 233 and that is in spatial communication with the main hole section 233, and a tertiary hole section 235 that is smaller than the secondary hole section 234 and that extends from the secondary hole section 234 in a direction away from the main hole section 233. In this embodiment, the secondary hole section 234 is in front of the main hole section 233. The coupling portion 23 of each of the temple units 2 further has two flexible arm segments 238 that cooperatively define the corresponding second coupling hole 232 therebetween. In this embodiment, the second coupling hole 232 is disposed behind the first coupling hole 231. The tertiary hole section 235 may serve to increase the flexibility of the coupling portion 23.

Each of the connecting units 3 interconnects a respective one of the temple units 2 and the respective one of the mounting portions 13 of the main frame unit 1, such that the temple units 2 are pivotable relative to the main frame unit 1. Each of the connecting units 3 includes a pivoting portion 31 that is pivotally connected to the respective one of the mounting portions 13, a base portion 32 that is disposed at an inner side of the coupling portion 23 of the respective one of the temple units 2, a connecting portion 33 that extends in a curved manner from an inner side of the base portion 32 to be connected to a rear end of the pivoting portion 31, and a first coupling member 34 and a second coupling member 35 that are integrally disposed on an outer side of the base portion 32 and that are respectively coupled to the first and second coupling holes 231, 232, of the coupling portion 23 of the corresponding one of the temple units 2.

The first coupling member 34 of each of the connecting unit 3 has a neck portion 342 that is operable to extend through the main hole section 233, and that is operable to be positioned in the secondary hole section 234, and a head portion 341 that is connected to a distal end of the neck portion 342, that is operable to move past the main hole section 233, and that is not permitted to move past the secondary hole section 234. The second coupling member 35 of each of the connecting units 3 has an inserting portion 351 that is operable to extend through the corresponding second coupling hole 232, and a barb portion 352 that is formed at a distal end of the inserting portion 351 and that is operable to hook one of the corresponding flexible arm segments 238. Portions of the first and second coupling members 34, 35 extending through the coupling portion 23 (via the respective first and second coupling holes 231, 232) is contained by the containing groove 223.

Due to structural symmetry of the eyewear, for the sake of brevity, only the elements in one of the temple units 2 and a respective one of the connecting units 3 will be elaborated in details hereon. When assembling, the protecting portion 22 of the temple unit 2 is sleeved on the front end of the temple 21, and the coupling portion 23 is mounted to the side groove 222. Then, the temple 21, the protecting portion 22, and the coupling portion 23 are fastened together via the fixing members 24, and the pivoting portion 31 of the connecting unit 3 is pivotally connected to the respective one of the mounting portions 13. Lastly, the first and second coupling members 34, 35 are respectively coupled to the first and second coupling holes 231, 232 of the coupling portion 23.

Specifically, during the coupling process, the head and neck portions 341, 342 of the first coupling member 34 are initially driven to extend through the main hole section 233 of the first coupling hole 231, such that the head portion 341 extends into the containing groove 223 and the neck portion 342 is disposed in the main hole section 233. Then, the temple unit 2 is moved rearwardly relative to the connecting unit 3, such that the neck portion 342 is driven to be positioned in the secondary hole section 234, where the head portion 341 is not permitted to move past. After the first coupling member 34 is coupled, the inserting portion 351 and the barb portion 352 of the second coupling member 35 is then driven to extend through the second coupling hole 232, such that the barb portion 352 extends into the containing groove 223 and is hooked to one of the flexible arm segments 238. The components of the eyewear can be easily disassembled by undoing the abovementioned steps in a reverse order. In addition, when a user wishes to use a protecting portion 22 with different exterior features (color, shape, etc), one may simply unfasten the fixing member 24 to unfasten the original protecting portion 22 away from the corresponding temple 21 and the coupling portion 23 to replace it with a new one that suits the user's need.

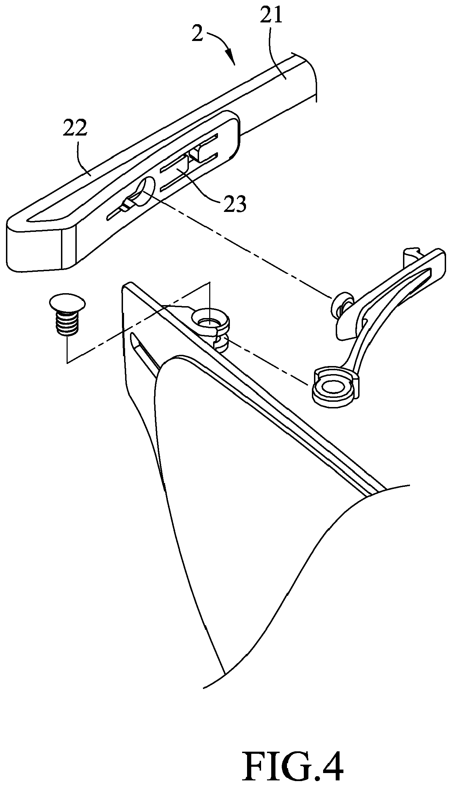

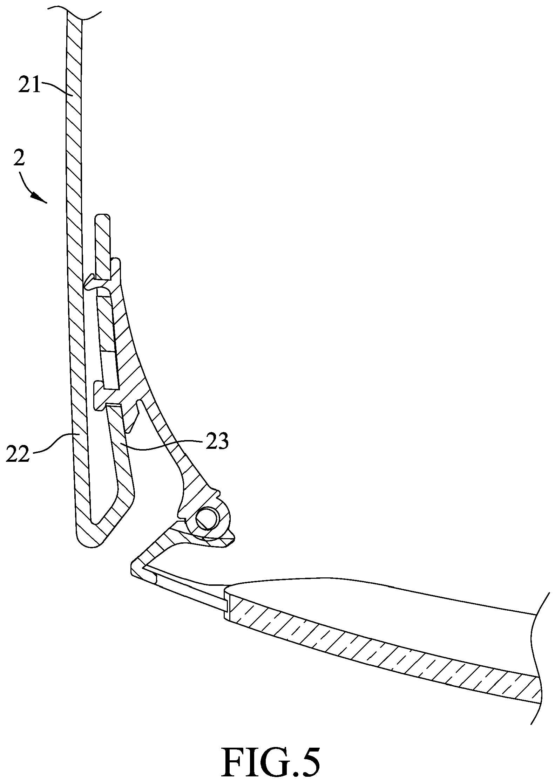

Referring to FIGS. 4 and 5, a second embodiment of the eyewear according to the disclosure is similar to that of the first embodiment. In this embodiment, the protecting portion 22 integrally extends from the front end of the temple 21 to be integrally molded and connected to the coupling portion 23 (i.e., each of the temple units 2 is configured as a one-piece component) . In a scenario in which the user does not have a need to replace protecting portion 22 with a new design, the eyewear in this embodiment offers the same advantage as the previous embodiment, further alleviating the need for the fixing members 24 for a simpler assembling process.

Overall, the eyewear of this disclosure offers easy assembling and disassembling between the main frame unit 1 and the temple units 2 via the coupling mechanism of the connecting units 3.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. An eyewear including:
a main frame unit (1) that includes two mounting portions (13) respectively at left and right sides thereof;
two temple units (2), each of which is disposed in back of a respective one of said mounting portions (13) and includes an elongated temple (21); and
two connecting units (3), each of which interconnects a respective one of said temple units (2) and the respective one of said mounting portions (13) of said main frame unit (1), such that said temple units (2) are pivotable relative to said main frame unit (1); and **characterized in that**:
each of said temple units (2) further includes a coupling portion (23) that is disposed at a front end of said corresponding temple (21) and that defines spaced-apart first and second coupling holes (231 , 232) ; and
each of said connecting units (3) includes a pivoting portion (31) that is pivotally connected to the respective one of said mounting portions (13), and a first coupling member (34) and a second coupling member (35) that are respectively coupled to said first and second coupling holes (231, 232) of said coupling portion (23) of the corresponding one of said temple units (2).

2. The eyewear as claimed in Claim 1, further **characterized in that**:
said first coupling hole (231) of said coupling portion (23) of each of said temple units (2) has
a main hole section (233), and
a secondary hole section (234) that is smaller than said main hole section (233), and that is in spatial communication with said main hole section (233); and
said first coupling member (34) of each of said connecting units (3) has
a neck portion (342) that is operable to extend through said main hole section (233), and that is operable to be positioned in said secondary hole section (234), and
a head portion (341) that is connected to a distal end of said neck portion (342), that is operable to move past said main hole section (233), and that is not permitted to move past said secondary hole section (234).

3. The eyewear as claimed in Claim 2, further **characterized in that**:
said coupling portion (23) of each of said temple units (2) further has two flexible arm segments (238) that cooperatively define said corresponding second coupling hole (232) therebetween; and
said second coupling member (35) of each of said connecting units (3) has
an inserting portion (351) that is operable to extend through said corresponding second coupling hole (232), and
a barb portion (352) that is formed at a distal end of said inserting portion (351) and that is operable to hook one of the corresponding flexible arm segments (238).

4. The eyewear as claimed in Claim 3, further **characterized in that** each of said first coupling holes (231) further has a tertiary hole section (235) that is smaller than said secondary hole section (234) and that extends from said secondary hole section (234) in a direction away from said main hole section (233).

5. The eyewear as claimed in any one of Claims 1 to 4, **characterized in that** each of said connecting units (3) further includes
a base portion (32) that is disposed at an inner side of said coupling portion (23) of the respective one of said temple units (2), and that is for said first and second coupling members (34, 35) to be integrally disposed thereon, and
a connecting portion (33) that extends in a curved manner from an inner side of said base portion (32) to be connected to a rear end of said pivoting portion (31) .

6. The eyewear as claimed in Claim 5, further **characterized in that** each of said temple units (2) further includes
a protecting portion (22) that covers an outer side of said coupling portion (23) and that sleeves the front end of said corresponding temple (21), and
two fixing members (24) that fasten said corresponding temple (21), said protecting portion (22) and said coupling portion (23), one of said fixing members (24) extending outwardly from the inner side of said coupling portion (23) through said coupling portion (23) and said protecting portion (22), and the other one of said fixing members (24) extending outwardly from the inner side of said coupling portion (23) through said coupling portion (23), said protecting portion (22) and said corresponding temple (21).

7. The eyewear as claimed in Claim 6, further **characterized in that** a rear end of said protecting portion (22) of each of said temple units (2) is formed with an end groove (221) for the front end of said corresponding temple (21) to be inserted thereinto.

8. The eyewear as claimed in Claim 7, further **characterized in that** said protecting portion (22) of each of said temple units (2) is further formed with
a side groove (222) that indents from an inner side of said protecting portion (22) for said coupling portion (23) to be mounted thereto ; and
a containing groove (223) that indents from said side groove (222) for containing portions of said first and second coupling members (34, 35) extending through said coupling portion (23).

9. The eyewear as claimed in Claim 5, further **characterized in that** each of said temple units (2) further includes a protecting portion (22) that integrally extends from the front end of said temple (21) to be integrally molded and connected to said coupling portion (23).

10. The eyewear as claimed in Claim 1, further **characterized in that** said main frame unit (1) further includes a bridge (11) and two lens portions (12) that are mounted respectively to left and right ends of said bridge (11).
